# EUROPÄISCHE PATENTSCHRIFT

(11) **EP 3 728 910 B1**
(45) Veröffentlichungstag und Bekanntmachung des Hinweises auf die Patenterteilung: **28.02.2024**
(21) Anmeldenummer: 18826987.2
(22) Anmeldetag: 12.12.2018
(51) Int. Cl.: F16J 15/322, F16J 15/34, F16J 15/3208, F16J 15/3236, F16J 15/3212, F16J 15/16

(54) **DICHTUNGSANORDNUNG**
SEAL ASSEMBLY
SYSTÈME D'ÉTANCHÉITÉ

(30) Priorität: 21.12.2017 DE 102017011930
(43) Veröffentlichungstag der Anmeldung: 28.10.2020
(73) Patentinhaber: Carl Freudenberg KG, 69469 Weinheim (DE)
(72) Erfinder: LAUER, Frank, 69231 Rauenberg (DE); KOHL, Christian, 69469 Weinheim (DE); KRAMER, Thomas, 64668 Rimbach (DE)
(86) Internationale Anmeldenummer: PCT/EP2018/084471
(87) Internationale Veröffentlichungsnummer: WO 2019/121196

(56) Entgegenhaltungen:
- WO-A2-2012/122445
- FR-A1- 2 535 428
- JP-A- 2011 069 383
- US-A- 5 799 953

## Beschreibung

Die Erfindung betrifft eine Dichtungsanordnung, umfassend ein erstes Dichtelement und ein Anpresselement, wobei das erste Dichtelement als Nutring ausgebildet ist und eine erste Dichtlippe und eine zweite Dichtlippe aufweist, wobei das Anpresselement zwischen erster Dichtlippe und zweiter Dichtlippe angeordnet ist und eine radiale Vorspannung von erster Dichtlippe und zweiter Dichtlippe bewirkt.

### Stand der Technik

Derartige Dichtungsanordnungen sind aus dem allgemeinen Maschinenbau bekannt und kommen beispielsweise als Stangendichtung oder Kolbendichtung beispielsweise zur Abdichtung translatorisch bewegter Maschinenelemente zum Einsatz. Das erste Dichtelement liegt dabei mit der ersten Dichtlippe an dem Gehäuse und der zweiten Dichtlippe an dem abzudichtenden Maschinenelement an. Das Anpresselement, welches zwischen den beiden Dichtlippen angeordnet ist, bewirkt eine radiale Vorspannung der beiden Dichtlippen an Gehäuse und Maschinenelement und gewährleistet dadurch eine Dichtheit der Dichtungsanordnung.

Aus dem Stand der Technik ist es bekannt, als Anpresselement einen oder mehrere Federkörper vorzusehen, die in der Nut angeordnet sind, die sich zwischen erster Dichtlippe und zweiter Dichtlippe ergibt. Hierbei ist problematisch, dass abzudichtendes Medium in Kontakt mit den Federkörpern gelangen kann, wobei in der Nut zwischen den beiden Dichtlippen und insbesondere auch in dem Federkörper abzudichtendes Medium verbleiben kann, so dass sich hier Toträume und nicht reinigbare Spalten ergeben. Daher sind derartige Dichtungen nicht zum Einsatz in der Lebensmitteltechnologie geeignet. In diesem Zusammenhang ist auch bekannt, Nutringe mit einer Auskleidung aus Silikon-Werkstoffe zu versehen. Derartige Auskleidungen sind aber aufwendig in der Herstellung.

Die FR 2 535 428 A1 zeigt jeweils eine Dichtungsanordnung mit einem als Nutring ausgebildeten Dichtelement, welches mit einem Anpresselement versehen ist. Das Anpresselement füllt dabei den Zwischenraum zwischen den beiden Dichtlippen vollständig aus, so dass keinerlei Ausgleichsraum vorhanden ist.

Die US 5 799 953 A zeigt eine Dichtungsanordnung mit einem als Nutring ausgebildeten Dichtelement. Dabei kann zwischen den beiden Dichtlippen ein Federkörper angeordnet sein.

Die WO 2012/122445 A2 zeigt eine Dichtungsanordnung mit einem als Nutring ausgebildeten Dichtelement, welches mit einem Anpresselement versehen ist. Die Dichtlippen weisen dabei Dichtkanten auf, wobei diese zur Stirnseite von Dichtelement und Anpresselement in axialer Richtung versetzt sind.

JP 2011 069 383 offenbart eine Dichtungsanordnung nach der Präambel von Anspruch 1.

### Darstellung der Erfindung

Der Erfindung liegt die Aufgabe zugrunde, eine Dichtungsanordnung bereitzustellen, welche bei guter Dichtwirkung für den Einsatz in der Lebensmitteltechnologie geeignet ist.

Diese Aufgabe wird mit den Merkmalen von Anspruch 1 gelöst. Auf vorteilhafte Ausgestaltungen nehmen die Unteransprüche Bezug.

Zur Lösung der Aufgabe umfasst die Dichtungsanordnung ein erstes Dichtelement und ein Anpresselement, wobei das erste Dichtelement als Nutring ausgebildet ist und eine erste Dichtlippe und eine zweite Dichtlippe aufweist, wobei das Anpresselement zwischen erster Dichtlippe und zweiter Dichtlippe angeordnet ist und eine radiale Vorspannung von erster Dichtlippe und zweiter Dichtlippe an das abzudichtende Maschinenelement und das Gehäuse bewirkt, wobei das Anpresselement den Spalt zwischen erster Dichtlippe und zweiter Dichtlippe verschließt und damit medienseitig eine totraumfreie und ebene Fläche bildet.

Zwischen Dichtelement und Anpresselement bildet sich erfindungsgemäß zumindest ein Ausgleichsraum. Der Ausgleichsraum ermöglicht eine Kompensation von Formänderungen des Dichtelementes und des Anpresselementes aufgrund von thermischen Dehnungen und Medienquellung.

Hierbei ist vorteilhaft, dass der durch die Nut gebildete Raum verschlossen ist, so dass kein Medium in diesen Raum eindringen kann. Ein weiterer Vorteil ist, dass das Anpresselement so ausgebildet ist, dass dieses nur mit einer verhältnismäßig geringen Kontaktfläche mit abzudichtendem Medium in Berührung gelangt. Ferner ist das Anpresselement so ausgestaltet, dass kein abzudichtendes Medium in dem Anpresselement verbleibt. Dadurch ist die Dichtungsanordnung totraumfrei ausgelegt und insbesondere für den Einsatz in der Lebensmitteltechnologie geeignet.

Das erste Dichtelement kann aus polymerem Werkstoff ausgebildet sein. Ein besonders geeigneter polymerer Werkstoff ist beispielsweise PTFE. PTFE weist eine besonders geringe Reibung auf und ist gegenüber den meisten abzudichtenden Medien, insbesondere den meisten abzudichtenden Medien aus dem Bereich der Lebensmitteltechnologie, resistent. Des Weiteren ist PTFE gegenüber Reinigungsmedien resistent, wie sie beispielsweise bei einer Clean-In-Place-Reinigung (CIP-Reinigung) verwendet werden und für den Kontakt mit Lebensmitteln freigegeben sind. Bei einer CIP-Reinigung werden die Komponenten einer lebensmitteltechnischen Anlage, wie beispielsweise die Dichtungsanordnung an Ort und Stelle - ohne Demontage - gereinigt.

Die erfindungsgemäße Dichtungsanordnung ist aufgrund ihrer Formgebung besonders für eine CIP-Reinigung geeignet, weil weder Reinigungsmittel noch Produktreiste in Toträumen verbleiben können.

Das Anpresselement kann aus elastomerem Werkstoff ausgebildet sein. Dabei bewirkt das Anpresselement eine konstante Anpressung des ersten Dichtelements an das Maschinenelement. Ein vorteilhafter elastomerer Werkstoff für den Einsatz in der Lebensmitteltechnologie ist Fluorkautschuk. Vergleichbar zu PTFE ist Fluorkautschuk gegenüber den meisten Medien resistent und darüber hinaus über ein weites Temperaturspektrum einsetzbar. Neben Fluorkautschuk findet auch Ethylen-Proplyen-Dien-Kautschuk (EPDM) Anwendung. Das Anpresselement kann dabei in einer großen Formenvielfalt hergestellt werden. Das Anpresselement kann dabei auf die Form der Nut und die gewünschte Anpressung der beiden Dichtlippen an das Maschinenelement abgestimmt werden.

Das Anpresselement kann den Spalt zwischen erster Dichtlippe und zweiter Dichtlippe bündig mit den freien Enden der ersten Dichtlippe und der zweiten Dichtlippe abschließen. Dadurch ergibt sich eine ebene Flanke, welche dem abzudichtenden Raum, bzw. der Umgebung zugeordnet ist. Die Kontur des Dichtelementes ist bei dieser Ausgestaltung auf der Medienseite plan ausgeführt. Das Eindringen von Medien in die Dichtungsanordnung kann dabei verhindert werden. Eine derartige Dichtungsanordnung ist totraumfrei und für den Einsatz in der Lebensmitteltechnologie geeignet. Durch das Anpresselement ergibt sich darüber hinaus eine definierte und dauerhafte Anpressung der Dichtungsanordnung an das abzudichtende Maschinenelement und dadurch eine hohe Dichtwirkung.

Zwischen erster Dichtlippe und zweiter Dichtlippe kann ein Federkörper angeordnet sein. Der Federkörper bewirkt eine zusätzliche radiale Vorspannung von erster Dichtlippe und zweiter Dichtlippe, so dass sich dadurch die dauerhafte Dichtwirkung noch einmal verbessert. Dabei ist der Federkörper in Richtung des abzudichtenden Raumes von dem Anpresselement verdeckt, so dass der Federkörper nicht mit abzudichtendem Medium in Kontakt gelangt.

Das Anpresselement kann formschlüssig in den Spalt zwischen erster Dichtlippe und zweiter Dichtlippe gehalten sein. Dazu können das erste Dichtelement und das Anpresselement mit einer geeigneten Formschlussgeometrie versehen sein. Durch den Formschluss ist das Anpresselement verliersicher in dem ersten Dichtelement fixiert, was insbesondere während des Transports und der Montage der Dichtungsanordnung vorteilhaft ist. Der Formschluss verhindert aber auch, dass das Anpresselement durch dynamische Beanspruchung sowie betriebsbedingte Druckschwankungen und Temperaturänderungen herauswandert.

Das Anpresselement kann sich axial an dem Nutgrund des ersten Dichtelementes abstützen. Dadurch verbessert sich das Verhalten der Dichtungsanordnung bei Druckbeaufschlagung.

Das erste Dichtelement kann eine dritte Dichtlippe und eine vierte Dichtlippe aufweisen, die in die zur ersten Dichtlippe und zweiten Dichtlippe abgewandten Seite ragen, wobei in dem Spalt zwischen dritter Dichtlippe und vierter Dichtlippe ein zweites Anpresselement angeordnet ist. Daraus ergibt sich eine Dichtungsanordnung für translatorisch bewegte Maschinenelemente, welche in beide axiale Richtungen gleichermaßen gut abdichtet. Aus dem ersten Dichtelement kann eine radial nach außen abragende Schulter ausgebildet sein. Mittels der Schulter kann die Dichtungsanordnung ortsfest in einem Gehäuse positioniert werden.

### Kurzbeschreibung der Zeichnung

Einige Ausgestaltungen der erfindungsgemäßen Dichtungsanordnung werden nachfolgend anhand der Figuren näher erläutert. Diese zeigen, jeweils schematisch:
- Fig. 1: eine nicht beanspruchte Dichtungsanordnung im Schnitt;
- Fig. 2: eine nicht beanspruchte Dichtungsanordnung gemäß Figur 1 mit radial nach außen abragender Schulter;
- Fig. 3: eine nicht beanspruchte Dichtungsanordnung mit Federkörper;
- Fig. 4: eine nicht beanspruchte beidseitig wirkende Dichtungsanordnung;
- Fig. 5: eine erfindungsgemäße Dichtungsanordnung mit optimierter Geometrie;
- Fig. 6: eine nicht beanspruchte Dichtungsanordnung mit einer Axialdichtung.

### Ausführung der Erfindung

Die Figuren zeigen eine Dichtungsanordnung 1 mit einem ersten Dichtelement 2 und einem Anpresselement 3, wobei das erste Dichtelement 2 als Nutring ausgebildet ist. Das erste Dichtelement 2 weist eine erste Dichtlippe 4 und eine zweite Dichtlippe 5 auf. Das Anpresselement 3 ist zwischen erster Dichtlippe 4 und zweiter Dichtlippe 5 angeordnet und bewirkt eine radiale Vorspannung von erster Dichtlippe 4 und zweiter Dichtlippe 5. Das Anpresselement 3 ist so ausgebildet, dass es den Spalt zwischen erster Dichtlippe 4 und zweiter Dichtlippe 5 verschließt. Dabei sind das erste Dichtelement 2 und das Anpresselement 3 stirnseitig entlang einer Radialebene eben ausgebildet. Es bildet sich eine Dichtungsanordnung 1 mit einer ebenen, totraumfreien Stirnseite.

Das erste Dichtelement 2 ist aus polymerem Werkstoff, hier PTFE ausgebildet und das Anpresselement 3 ist aus elastomerem Werkstoff, hier Fluorkautschuk gebildet.

Das Anpresselement 3 ist formschlüssig in dem Spalt zwischen erster Dichtlippe 4 und zweiter Dichtlippe 5 gehalten. Dazu weist die erste Dichtlippe 4 einen radial nach innen ragenden ersten Vorsprung 9 und die zweite Dichtlippe 5 weist an ihrem freien Ende einen radial in das Innere des Nutrings ragenden umlaufenden zweiten Vorsprung 10 auf. Dadurch ergibt sich in dem Spalt ein Hinterschnitt, in welchem das Anpresselement 3 nach Montage einrastet. Das Anpresselement 3 weist außenumfangsseitig und innenumfangsseitig jeweils einen umlaufenden Wulst 11 auf, welche so ausgebildet und auf dem Anpresselement 3 angeordnet sind, dass diese nach Montage des Anpresselementes 3 in dem ersten Dichtelement 2 an den nach innen weisenden Flanken des ersten Vorsprungs 9 und des zweiten Vorsprungs 10 anliegen. Nach Montage liegen die beiden Wulste 11 demnach axial hinter dem ersten Vorsprung 9 und dem zweiten Vorsprung 10. Während der Montage schnappen die die Wulste 11 verliersicher hinter dem ersten Vorsprung 9 und dem zweiten Vorsprung 10 ein.

Der Innenumfang des ersten Vorsprungs 9 und der Außenumfang des zweiten Vorsprungs 10 sind zylinderförmig ausgebildet. Das Anpresselement 3 weist an dem nach außen weisenden Ende einen rohrförmigen Abschnitt auf, welcher an den Zylinderflächen von erstem Vorsprung 9 und zweitem Vorsprung 10 dichtend zur Anlage gelangt. Durch diese Anordnung ist der Spalt zwischen erster Dichtlippe 4 und zweiter Dichtlippe 5 verschlossen. Gleichzeitig wird die Anpressung der Dichtlippen 4, 5 und damit auch die Dichtwirkung erhöht. Das nach innen weisende Ende des Anpresselementes 3 ist innenumfangsseitig und außenumfangsseitig abgeschrägt, so dass sich der Querschnitt des Anpresselementes 3 in Richtung des Nutgrundes 18 verjüngt.

Das Anpresselement 3 ist dabei so ausgestaltet, dass es sich axial am Nutgrund 18 des Dichtelementes 2 abstützt, um so einer Druckbeaufschlagung standzuhalten.

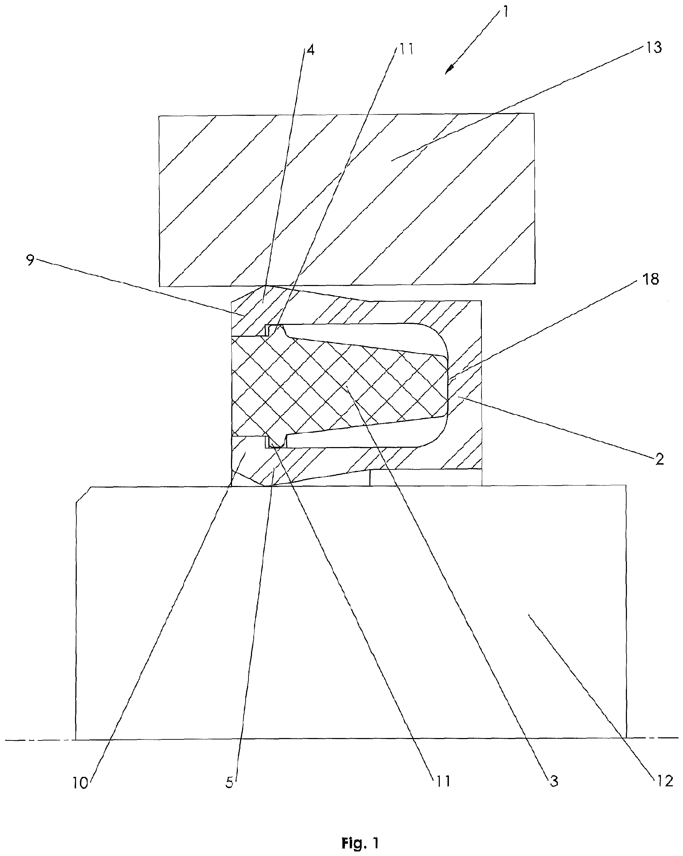

Figur 1 zeigt im Schnitt eine nicht beanspruchte Dichtungsanordnung 1 zur Abdichtung eines translatorisch bewegten Maschinenelementes 12. Dabei liegen die erste Dichtlippe 4 dichtend an dem Gehäuse 13 und die zweite Dichtlippe 5 dichtend an dem translatorisch bewegten Maschinenelement 12 an. Das Maschinenelement 12 ist vorliegend eine Kolbenstange.

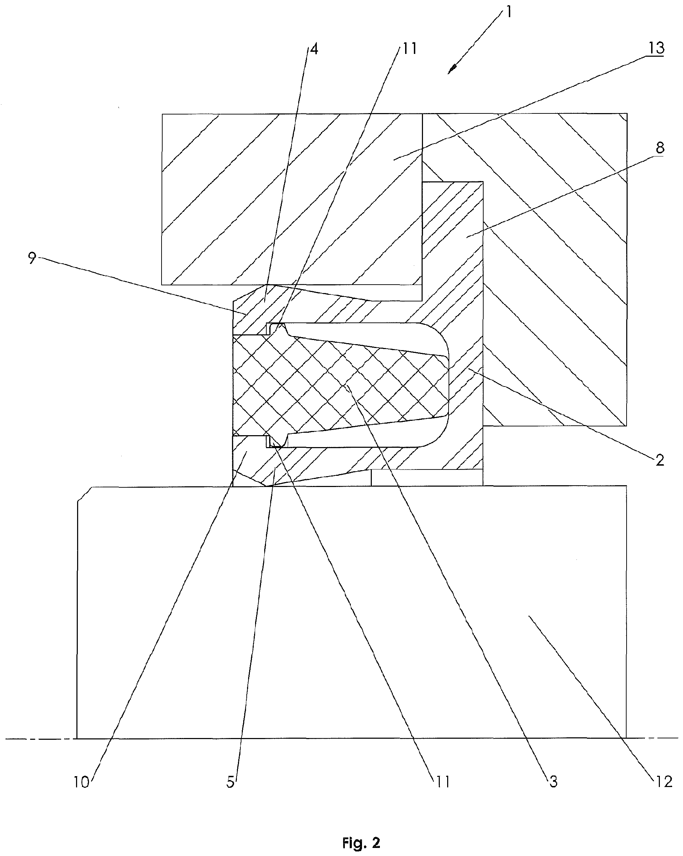

Figur 2 zeigt eine nicht beanspruchte Dichtungsanordnung 1 gemäß Figur 1, wobei das erste Dichtelement 2 zusätzlich mit einer Schulter 8 ausgerüstet ist, welche radial nach außen von dem ersten Dichtelement 2 abragt und der Montage in ein Gehäuse 13 dient. Nach der Montage ist die Schulter 8 in dem Gehäuse 13 verklemmt, so dass das Dichtelement 2 über die Schulter 8 verdrehsicher in dem Gehäuse 13 festgelegt ist. Eine derartiges Dichtelement 2 ist insbesondere zur Abdichtung rotatorisch bewegter Maschinenelemente 12 geeignet. Insofern ist das Maschinenelement 12 in der in Figur 2 gezeigten Ausgestaltung als rotierende Welle ausgebildet. Denkbar ist auch, dass sich das Maschinenelement 12 sowohl rotatorisch als auch translatorisch bewegt.

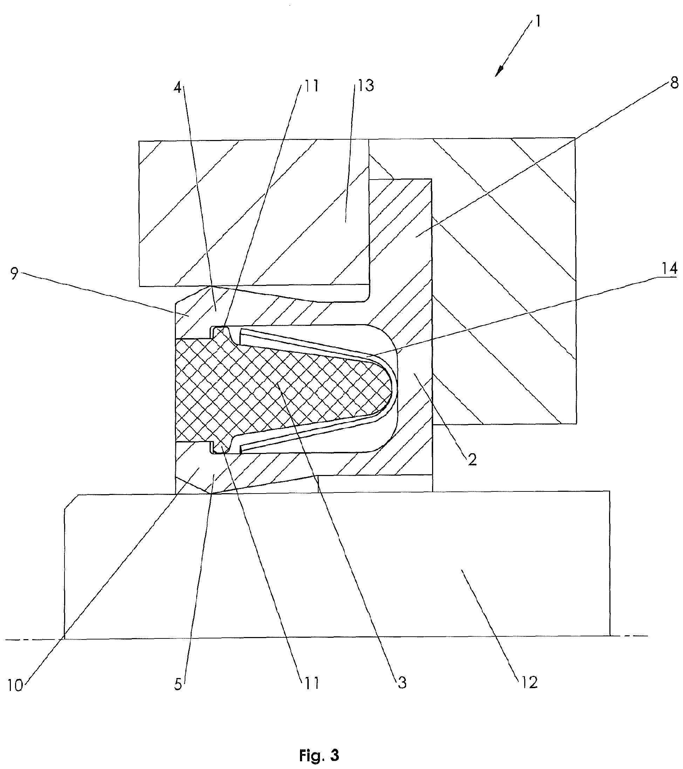

Figur 3 zeigt eine nicht beanspruchte Dichtungsanordnung 1 gemäß Figur 2. Zwischen erster Dichtlippe 4 und zweiter Dichtlippe 5 ist zusätzlich ein Federkörper 14 angeordnet. Der Federkörper 14 ist im Querschnitt V-förmig ausgebildet und in dem Spalt zwischen erstem Dichtelement 2 und Anpresselement 3 angeordnet. Durch die dichtende Anordnung des Anpresselementes 3 zwischen erster Dichtlippe 4 und zweiter Dichtlippe 5 gelangt der Federkörper 14 nicht in Kontakt mit abzudichtendem Medium. Der Federkörper 14 ist aus metallischem Material ausgebildet. Der Federkörper 14 kann ringförmig ausgebildet sein oder auch aus einzelnen Segmenten zusammengesetzt sein.

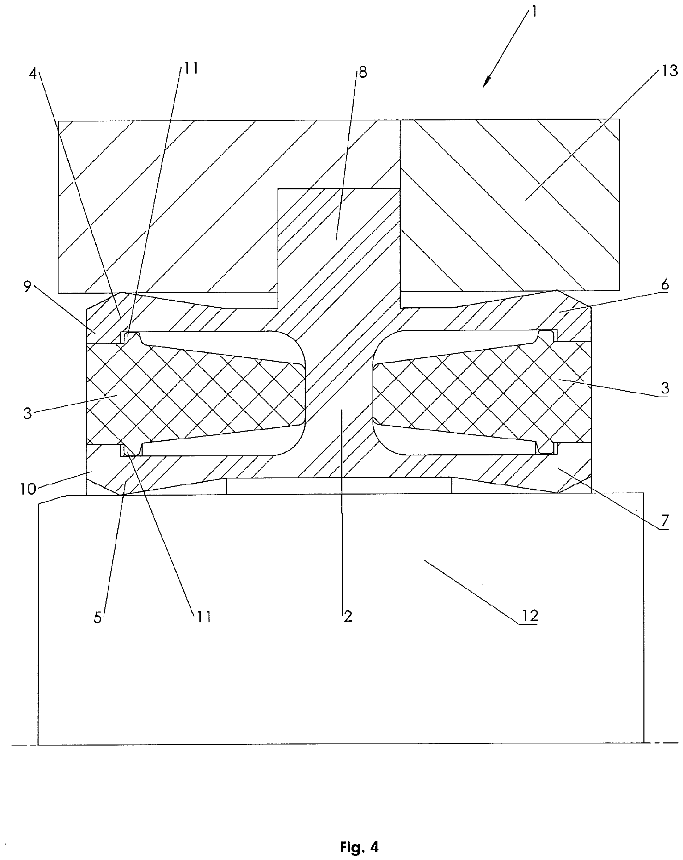

Figur 4 zeigt eine nicht beanspruchte Dichtungsanordnung 1, wobei das erste Dichtelement 2 eine dritte Dichtlippe 6 und eine vierte Dichtlippe 7 aufweisen, die in die zur ersten Dichtlippe 4 und zweiten Dichtlippe 5 axial abgewandten Seite ragen, wobei in dem Spalt zwischen dritter Dichtlippe 6 und vierter Dichtlippe 7 ein weiteres Anpresselement 3 angeordnet ist. Daraus ergibt sich eine Dichtungsanordnung 1, welche zur Abdichtung translatorisch bewegter Maschinenelemente 12 in beiden axialen Richtungen geeignet ist. Zwischen erster Dichtlippe 4 und zweiter Dichtlippe 5 sowie zwischen dritter Dichtlippe 6 und vierter Dichtlippe 7 kann jeweils ein Federkörper 14 angeordnet sein, welcher in Richtung des abzudichtenden Raums jeweils durch das Anpresselement 3 abgedeckt ist. Durch die optimale Ausführung mit einer Schulter 8, welche nach der Montage in dem Gehäuse 13 verklemmt ist, ist das Dichtelement 2 aber auch besonders zur Abdichtung rotatorisch bewegter Maschinenelemente 12 geeignet.

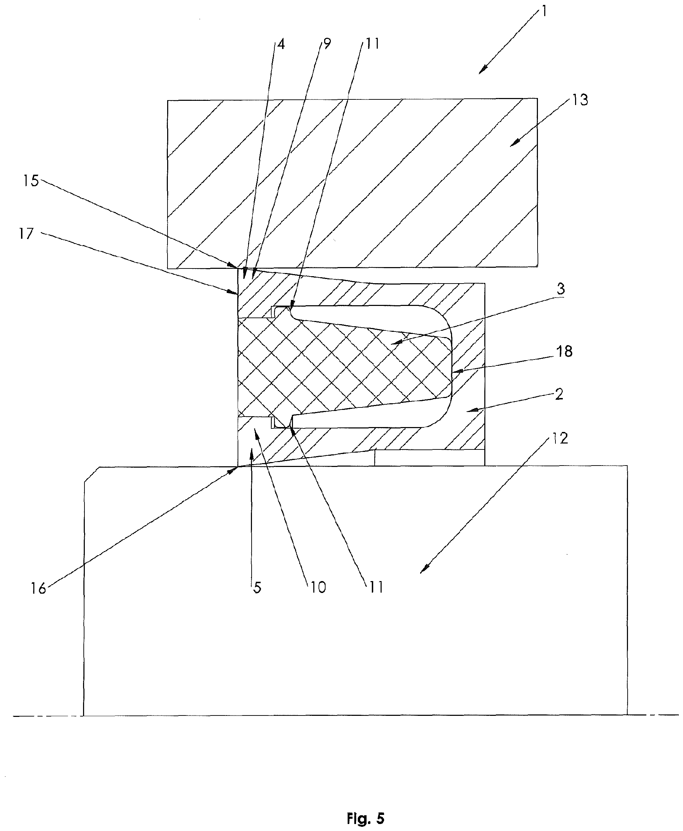

Figur 5 zeigt eine Weiterbildung der Dichtungsanordnung gemäß Figur 1. Bei der vorliegenden Ausgestaltung weisen die Dichtlippen 4, 5 erfindungsgemäß Dichtkanten 15, 16 auf, welche mit der Stirnseite 17 von Dichtelement 2 und Anpresselement 3 fluchten. Dadurch weist die Stirnseite 17 der Dichtungsanordnung 1 keinerlei Spalte auf und ist totraumfrei.

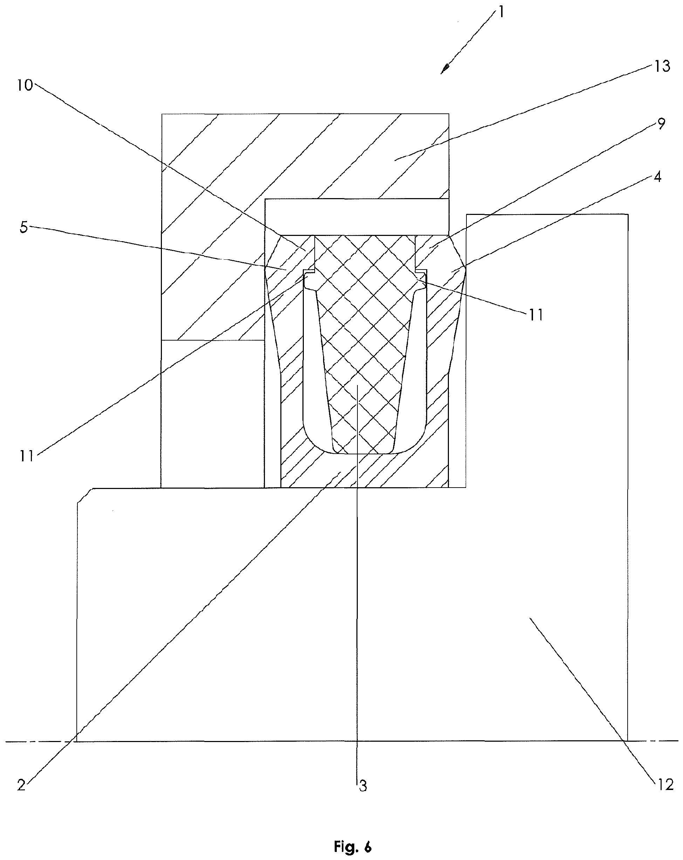

Figur 6 zeigt eine nicht beanspruchte Dichtungsanordnung 1 mit einem ersten Dichtelement 2 und einem Anpresselement 3, wobei das erste Dichtelement 2 als Nutring ausgebildet ist. Dabei ist das Dichtelement 2 so ausgerichtet, dass eine Dichtwirkung in Axialrichtung entsteht. Das erste Dichtelement 2 weist eine erste Dichtlippe 4 und eine zweite Dichtlippe 5 auf. Das Anpresselement 3 ist zwischen erster Dichtlippe 4 und zweiter Dichtlippe 5 angeordnet und bewirkt eine axiale Vorspannung von erster Dichtlippe 4 und zweiter Dichtlippe 5. Das Anpresselement 3 ist so ausgebildet, dass es den Spalt zwischen erster Dichtlippe 4 und zweiter Dichtlippe 5 verschließt.

Das erste Dichtelement 2 ist aus polymerem Werkstoff, hier PTFE ausgebildet und das Anpresselement 3 ist aus elastomerem Werkstoff, hier Fluorkautschuk gebildet.

Das Anpresselement 3 ist formschlüssig in dem Spalt zwischen erster Dichtlippe 4 und zweiter Dichtlippe 5 gehalten. Dazu weist die erste Dichtlippe 4 einen axial nach innen ragenden ersten Vorsprung 9 und die zweite Dichtlippe 5 weist an ihrem freien Ende einen axial in das Innere des Nutrings ragenden umlaufenden zweiten Vorsprung 10 auf. Dadurch ergibt sich in dem Spalt ein Hinterschnitt, in welchem das Anpresselement 3 nach Montage einrastet. Das Anpresselement 3 weist an beiden Flangen jeweils einen umlaufenden Wulst 11 auf, welche so ausgebildet und auf dem Anpresselement 3 angeordnet sind, dass diese nach Montage des Anpresselementes 3 in dem ersten Dichtelement 2 an den nach innen weisenden Flanken des ersten Vorsprungs 9 und des zweiten Vorsprungs 10 anliegen. Nach Montage liegen die beiden Wulste 11 demnach radial unterhalb des ersten Vorsprungs 9 und des zweiten Vorsprungs 10. Während der Montage schnappen die Wulste 11 verliersicher hinter dem ersten Vorsprung 9 und dem zweiten Vorsprung 10 ein.

Die einander zugewandten Flächen des ersten Vorsprungs 9 und des des zweiten Vorsprungs 10 sind ringförmig und plan ausgebildet. Das Anpresselement 3 weist an dem radial nach außen weisenden Ende einen rohrförmigen Abschnitt auf, welcher an den Ringflächen von erstem Vorsprung 9 und zweitem Vorsprung 10 dichtend zur Anlage gelangt. Durch diese Anordnung ist der Spalt zwischen erster Dichtlippe 4 und zweiter Dichtlippe 5 verschlossen. Gleichzeitig wird die Anpressung der Dichtlippen 4, 5 und damit auch die Dichtwirkung erhöht. Das radial nach innen weisende Ende des Anpresselementes 3 ist seitlich abgeschrägt, so dass sich der Querschnitt des Anpresselementes 3 in Richtung des Nutgrundes verjüngt.

Das Maschinenelement 12 weist ein Schulter auf, an dessen Flanke das Dichtelement 2 zur Anlage gelangt. Das Dichtelement liegt innenumfangsseitig an dem Maschinenelement an. Des Weiteren stützt sich das Dichtelement an einer Flanke des Gehäuses 13 ab.

## Patentansprüche

1. Dichtungsanordnung (1), umfassend ein erstes Dichtelement (2) und ein Anpresselement (3), wobei das erste Dichtelement (2) als Nutring ausgebildet ist und eine erste Dichtlippe (4) und eine zweite Dichtlippe (5) aufweist, wobei das Anpresselement (3) zwischen erster Dichtlippe (4) und zweiter Dichtlippe (5) angeordnet ist und eine radiale Vorspannung von erster Dichtlippe (4) und zweiter Dichtlippe (5) bewirkt, wobei das Anpresselement (3) den Spalt zwischen erster Dichtlippe (4) und zweiter Dichtlippe (5) verschließt, wobei die Dichtlippen (4, 5) Dichtkanten (15, 16) aufweisen, wobei sich zwischen Dichtelement (2) und Anpresselement (3) zumindest ein Ausgleichsraum bildet, **dadurch gekennzeichnet, dass** die Dichtkanten (15, 16) mit der Stirnseite (17) von Dichtelement (2) und Anpresselement (3) fluchten.

2. Dichtungsanordnung nach Anspruch 1, **dadurch gekennzeichnet, dass** das erste Dichtelement (2) aus polymerem Werkstoff ausgebildet ist.

3. Dichtungsanordnung nach Anspruch 1 oder 2, **dadurch gekennzeichnet, dass** das Anpresselement (3) aus elastomerem Werkstoff ausgebildet ist.

4. Dichtungsanordnung nach einem der Ansprüche 1 bis 3, **dadurch gekennzeichnet, dass** das Anpresselement (3) den Spalt zwischen erster Dichtlippe (4) und zweiter Dichtlippe (5) bündig mit der ersten Dichtlippe (4) und der zweiten Dichtlippe (5) abschließt.

5. Anpresselement nach einem der Ansprüche 1 bis 4, **dadurch gekennzeichnet, dass** zwischen der ersten Dichtlippe (4) und der zweiten Dichtlippe (5) ein Federkörper (14) angeordnet ist.

6. Dichtungsanordnung nach Anspruch 5, **dadurch gekennzeichnet, dass** das Anpresselement (3) den Federkörper (14) in Richtung des abzudichtenden Mediums abdeckt.

7. Dichtungsanordnung nach einem der Ansprüche 1 bis 6, **dadurch gekennzeichnet, dass** das Anpresselement (3) formschlüssig in den Spalt zwischen erster Dichtlippe (4) und zweiter Dichtlippe (5) gehalten ist.

8. Dichtungsanordnung nach einem der Ansprüche 1 bis 7, **dadurch gekennzeichnet, dass** sich das Anpresselement (3) axial an dem Nutgrund (18) des ersten Dichtelementes (4) abstützt.

9. Dichtungsanordnung nach einem der Ansprüche 1 bis 8, **dadurch gekennzeichnet, dass** das erste Dichtelement (2) eine dritte Dichtlippe (6) und eine vierte Dichtlippe (7) aufweist, die in die zur ersten Dichtlippe (4) und zweiten Dichtlippe (5) abgewandten Seite ragen, wobei in dem Spalt zwischen dritter Dichtlippe (6) und vierter Dichtlippe (7) ein weiteres Anpresselement (3) angeordnet ist.

10. Dichtungsanordnung nach einem der Ansprüche 1 bis 9, **dadurch gekennzeichnet, dass** aus dem ersten Dichtelement (2) eine radial nach außen abragende Schulter (8) ausgebildet ist.

## Claims

1. Seal assembly (1) comprising a first sealing element (2) and a pressure-exerting element (3), wherein the first sealing element (2) is in the form of a grooved ring and has a first sealing lip (4) and a second sealing lip (5), wherein the pressure-exerting element (3) is arranged between the first sealing lip (4) and second sealing lip (5) and exerts a radial preload on the first sealing lip (4) and second sealing lip (5), wherein the pressure-exerting element (3) closes the gap between the first sealing lip (4) and second sealing lip (5), wherein the sealing lips (4, 5) have sealing edges (15, 16), wherein at least one compensation space forms between the sealing element (2) and pressure-exerting element (3), **characterized in that** the sealing edges (15, 16) are aligned with the end side (17) of the sealing element (2) and pressure-exerting element (3).

2. Seal assembly according to Claim 1, **characterized in that** the first sealing element (2) is formed from polymer material.

3. Seal assembly according to Claim 1 or 2, **characterized in that** the pressure-exerting element (3) is formed from elastomer material.

4. Seal assembly according to one of Claims 1 to 3, **characterized in that** the pressure-exerting element (3), lying flush with the first sealing lip (4) and the second sealing lip (5), closes off the gap between the first sealing lip (4) and second sealing lip (5).

5. Pressure-exerting element according to one of Claims 1 to 4, **characterized in that** a spring body (14) is arranged between the first sealing lip (4) and the second sealing lip (5).

6. Seal assembly according to Claim 5, **characterized in that** the pressure-exerting element (3) covers the spring body (14) in the direction of the medium to be sealed.

7. Seal assembly according to one of Claims 1 to 6, **characterized in that** the pressure-exerting element (3) is held in a form-fitting manner in the gap between the first sealing lip (4) and second sealing lip (5).

8. Seal assembly according to one of Claims 1 to 7, **characterized in that** the pressure-exerting element (3) is axially supported on the groove base (18) of the first sealing element (4).

9. Seal assembly according to one of Claims 1 to 8, **characterized in that** the first sealing element (2) has a third sealing lip (6) and a fourth sealing lip (7), which protrude into the side which faces away from the first sealing lip (4) and second sealing lip (5), wherein a further pressure-exerting element (3) is arranged in the gap between the third sealing lip (6) and fourth sealing lip (7).

10. Seal assembly according to one of Claims 1 to 9, **characterized in that** a radially outwardly protruding shoulder (8) is formed from the first sealing element (2).

## Revendications

1. Agencement d'étanchéité (1), comprenant un premier élément d'étanchéité (2) et un élément de pression (3), le premier élément d'étanchéité (2) étant réalisé sous forme de bague rainurée et présentant une première lèvre d'étanchéité (4) et une deuxième lèvre d'étanchéité (5), l'élément de pression (3) étant agencé entre la première lèvre d'étanchéité (4) et la deuxième lèvre d'étanchéité (5) et provoquant une précontrainte radiale de la première lèvre d'étanchéité (4) et de la deuxième lèvre d'étanchéité (5), l'élément de pression (3) fermant la fente entre la première lèvre d'étanchéité (4) et la deuxième lèvre d'étanchéité (5), les lèvres d'étanchéité (4, 5) présentant des arêtes d'étanchéité (15, 16), au moins un espace de compensation se formant entre l'élément d'étanchéité (2) et l'élément de pression (3), **caractérisé en ce que** les arêtes d'étanchéité (15, 16) sont alignées avec le côté frontal (17) de l'élément d'étanchéité (2) et de l'élément de pression (3).

2. Agencement d'étanchéité selon la revendication 1, **caractérisé en ce que** le premier élément d'étanchéité (2) est réalisé en matériau polymère.

3. Agencement d'étanchéité selon la revendication 1 ou 2, **caractérisé en ce que** l'élément de pression (3) est réalisé en matériau élastomère.

4. Agencement d'étanchéité selon l'une quelconque des revendications 1 à 3, **caractérisé en ce que** l'élément de pression (3) ferme la fente entre la première lèvre d'étanchéité (4) et la deuxième lèvre d'étanchéité (5) en affleurement avec la première lèvre d'étanchéité (4) et la deuxième lèvre d'étanchéité (5).

5. Élément de pression selon l'une quelconque des revendications 1 à 4, **caractérisé en ce qu'**un corps élastique (14) est agencé entre la première lèvre d'étanchéité (4) et la deuxième lèvre d'étanchéité (5).

6. Agencement d'étanchéité selon la revendication 5, **caractérisé en ce que** l'élément de pression (3) recouvre le corps élastique (14) en direction du milieu à étanchéifier.

7. Agencement d'étanchéité selon l'une quelconque des revendications 1 à 6, **caractérisé en ce que** l'élément de pression (3) est maintenu par complémentarité de forme dans la fente entre la première lèvre d'étanchéité (4) et la deuxième lèvre d'étanchéité (5).

8. Agencement d'étanchéité selon l'une quelconque des revendications 1 à 7, **caractérisé en ce que** l'élément de pression (3) s'appuie axialement sur le fond de rainure (18) du premier élément d'étanchéité (4).

9. Agencement d'étanchéité selon l'une quelconque des revendications 1 à 8, **caractérisé en ce que** le premier élément d'étanchéité (2) présente une troisième lèvre d'étanchéité (6) et une quatrième lèvre d'étanchéité (7) qui font saillie dans le côté détourné de la première lèvre d'étanchéité (4) et de la deuxième lèvre d'étanchéité (5), un autre élément de pression (3) étant agencé dans l'espace entre la troisième lèvre d'étanchéité (6) et la quatrième lèvre d'étanchéité (7).

10. Agencement d'étanchéité selon l'une quelconque des revendications 1 à 9, **caractérisé en ce qu'**un épaulement (8) faisant saillie radialement vers l'extérieur est réalisé à partir du premier élément d'étanchéité (2).
